# EUROPEAN PATENT APPLICATION

(11) **EP 3 187 871 A1**
(43) Date of publication of application: **05.07.2017**
(21) Application number: 16466016.9
(22) Date of filing: 23.12.2016
(51) Int. Cl.: G01N 29/04, B23K 37/02, G01N 29/22, G01N 29/265

(54) **PIPELINE EXAMINATION MANIPULATOR, PREFERABLY FOR EXAMINATION OF PIPELINE WELDS IN PLACES WITH DIFFICULT ACCESS, AND METHOD OF ATTACHMENT OF SUCH MANIPULATOR TO A PIPELINE**

(30) Priority: 29.12.2015 CZ 20150953
(71) Applicant: Skoda JS a.s., 316 00 Plzen (CZ); Západoceská univerzita v Plzni, 30614 Plzen - Jizni Predmesti (CZ)
(72) Inventor: Rausch, Ivan, 323 00 Plzen (CZ); Smolik, Petr, 337 01 Rokycany (CZ); Cechura, Tomas, 301 00 Plzen (CZ); Jager, Arnold, 312 00 Plzen (CZ); Svejda, Martin, 340 12 Svihov (CZ)
(74) Representative: Pavlica, Tomas

(57) **Abstract**

Manipulator used to examine pipelines, preferably pipeline circumferential welds with limited access, comprising at least a car (1) to hold at least one probe, a control unit and a clamping element (13) to clamp the assembly around the pipe (14) to be examined. The car (1) is designed for circumferential movement around the pipe (14) being examined, while the clamping element (13) is designed to go round the pipe (14) being examined and has two opposite free ends. The car (1) is provided with two independent driving mechanisms positioned at a distance from each other, which are designed to attach the car (1) to the clamping element (13) and to move on it around the pipe (14) being examined, while the control unit is programmed to control one of the driving mechanisms to ensure the required movement of the car (1) along the pipe (14) being examined and to control the other driving mechanism to ensure tightening of the clamping element (13) during the said movement of the car (1) by tightening the clamping element (13) to the pipe (14).

## Description

### Technology field

The present invention deals with the pipeline examination manipulator for examination of pipelines, preferably to perform non-destructive tests of circumferential welds of pipelines from the external surface, more preferably in places where access to the weld is limited, either in the direction of the pipeline axis or in the radial direction, or in both directions. The pipeline examination manipulator can be used to examine pipeline systems of outer diameters from 200 mm to 1250 mm in all industries and in all types of power plants, and more preferably it can be used in examinations made on pipelines made of non-magnetic materials and installed in the operated nuclear power plants. The invention further deals with the method of manipulator attachment to the pipeline being examined.

### State of the art

The manipulators used up to now to examine pipeline welds comprise a circumferential traversing gear of linear motion perpendicular to the traversing direction and are usually attached to the pipeline being tested by means of a guideway, magnetic wheels, chain or toothed belt joined to form a closed loop. The disadvantage of attachment by means of a guideway is the small range of diameters to which the rail can be fixed and, therefore, a great number of guideways needed for different diameters of the pipes being tested. On the other hand, the manipulator with magnetic wheels can be used for a large extent of pipeline diameters but cannot be used in pipelines made of non-magnetic steel that occur in nuclear power plants. Attachment by means of a chain or toothed belt forming a closed loop can also be used on non-magnetic steel pipelines and a single loop of chain or belt can again be used for a small range of pipe outer diameters only. The advantage as against the guideway is the lower acquisition costs per chain or belt loop.

An example of the manipulator's state of the art is Patent File No. EP578402 where the technical solution consists in a car attached to the pipe with a toothed belt routed over two toothed pulleys connected with a motor by means of gears. This solution, due to its design, does not make it possible to tighten the belt during manipulator's traverse, which is the fundamental drawback. The other considerable drawback is the height of the car and hence limitation in application in pipelines having sufficient space around only.

Another example of the state of the art is Patent File No. GB2032046. Here, the belt is connected with a pin to form an endless loop embracing the pipe and going through the car, where it is fitted onto a pulley. The car is driven by one pulley and the belt is tightened manually after putting the car on by setting the pulley farther from the pipe surface. The disadvantage is the big clearance of the car and impossibility to tighten the belt up during operation.

### Subject of the invention

Pipeline examination manipulator for examination of pipelines, especially pipeline welds in places with limited access, comprising at least a car to hold at least one probe, a control unit and a clamping element to clamp the assembly around the pipe, where the car is designed for circumferential movement around the pipe being examined and where this clamping element is designed to go round the pipe being examined and has two opposite free ends, and the car is provided with two independent driving mechanisms positioned at a distance from each other, which are designed to attach the car to the clamping element and to move on it around the pipe being examined, while the control unit is programmed to control one of the driving mechanisms to ensure the required movement of the car along the pipe being examined and to control the other driving mechanism to ensure tightening of the clamping element during the said movement of the car by tightening the clamping element to the pipe.

Preferably, the pipeline examination manipulator comprises a car provided with a movable arm for attaching at least one probe, where the movable arm is provided with a linear drive whose direction of movement is essentially perpendicular to the direction of movement of the car around the pipeline, i.e. in the direction of the pipe axis. The said linear drive comprises a toothed rack with a drive, among other things. At the end of the movable arm, a holder is attached for at least one ultrasonic probe. When examining a pipe, for instance when examining a pipe weld using the pulse echo technique, the probe may, thanks to the movable arm, advantageously perform the required meandering movement during measurement or may be set at the required distance from the weld being tested with the Time-of-Flight Diffraction or the Phased Array technique.

According to another aspect, the method of attachment of the pipeline examination manipulator to the pipe being examined is submitted, according to which a clamping element is arranged around the pipe with free ends to be gripped subsequently in the driving mechanisms of the car, after which the clamping mechanism is tightened around the pipe by actuating the driving mechanisms.

According to a preferred embodiment the structure of the manipulator is designed for potential contact with water possibly brought to the measuring probe to ensure acoustic coupling with the surface being tested around the weld. According to a preferred embodiment the structure of the whole manipulator is designed as detachable, e.g. by means of screws, in order to perform minor repairs of the components by way of replacement.

### Overview of figures shown in drawings

The example of the embodiment of the manipulator is described with references to the drawings in which it is shown:
- Fig. 1: Manipulator Side View
- Fig. 2: Manipulator Ground Plan
- Fig. 3: Flow Chart of the Manipulator Motor Control Unit

### Examples of embodiment of the invention

The subject of the invention will be understood easier on the example of the embodiment shown on the attached sketches. However, it is obvious that this example of the embodiment serves for illustration only and should not be construed to restrict the scope of protection of the technical solution solely to the embodiment shown.

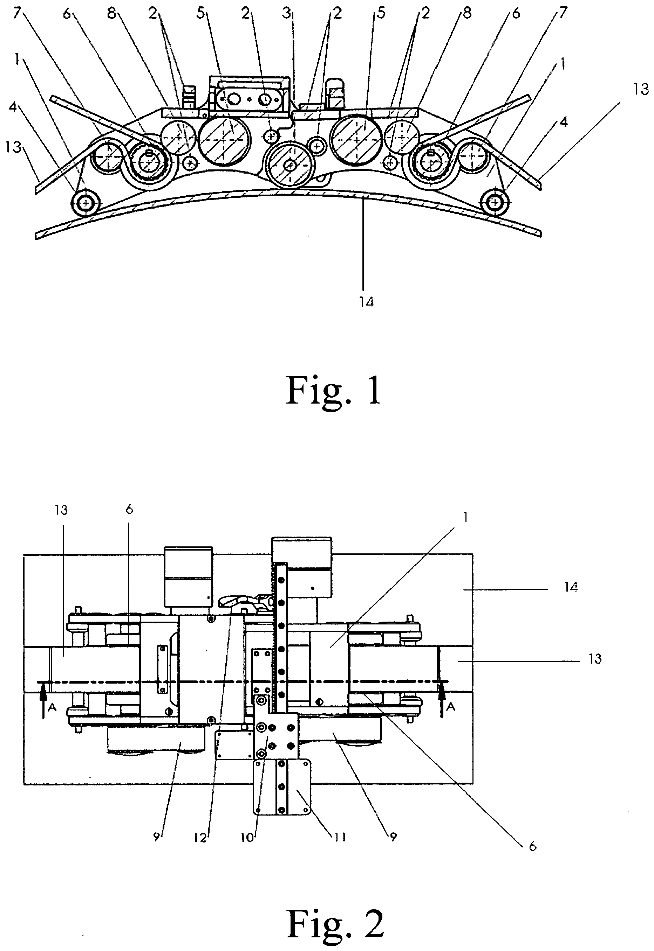

The pipeline examination manipulator according to this invention, preferably for examination of circumferential welds of pipelines with limited access, is introduced in Fig. 1 and comprises at least a clamping element 13 and a car 1 for attaching at least one probe to examine the pipe 14. The car 1 is provided with two driving units installed at a distance from each other, and the manipulator is provided with a control unit connected to both driving units and programmed to control these driving units to ensure the car 1 to traverse along the pipe 14 being examined while simultaneously tightening the clamping element 13 so that the car 1 cannot release from the pipe 14.

Both driving mechanisms on the car 1, therefore, ensure attachment of the car 1 of the manipulator to the pipe 14 being examined by means of the clamping element 13 and movement of the car 1 along the pipe 14 during the examination process. The tightening of the clamping element 13 to the pipe 14 being examined with one of the driving mechanisms as appropriate will create the required pressure of the car 1 onto the pipe 14 to ensure both attachment of the car 1 to the pipe 14 and reliable movement of the car 1 along the pipe 14. Preferably the clamping element 13 is chosen while taking into account the requirements for making the movement of the car 1 of the manipulator possible and at least the approximate pressure of the manipulator onto the pipe 14. The clamping element 13 has two free ends for easy fitting of the clamping element 13 to the pipe 14 being examined and to make the installation of the whole manipulator easier. The clamping element 13 is preferably a belt, in particular a toothed belt or a chain. The length of the clamping element 13 is chosen so as to suit the diameter of the pipe 14 being examined and so that the car 1 of the manipulator can traverse around the pipe 14 being examined safely. Preferably, the length of the clamping element 13 is at least approximately twice the circumference of the pipe 14 being examined in order to facilitate the movement of the car 1 around the whole circumference of the pipe 14 being examined. For instance, for a pipe to be examined of 510 mm in diameter, the preferrred length of the clamping element is 3600 mm.

The car 1 of the manipulator is provided with two driving mechanisms designed to move the clamping element 13 in relation to the car 1, whereby moving the car 1 around the pipe 14 on the one hand and ensuring the required tightening of the clamping element 13 to the pipe 14 being examined on the other. In the example of the embodiment of the car 1 of the manipulator, the driving mechanism comprises a guide roller 8, a contour roller 6 driven by a motor 5, and possibly also a pressure roller 7. The contour roller 6 is designed to feed the clamping element 13 through the driving mechanism. The guide roller 8 is arranged at the contour roller 6 to ensure correct feed of the clamping element 13 into the driving mechanism; it preferably makes sure that the clamping element 13 is not fed askew, whereby eliminating the risk of seizure of the car 1 when examining the pipe 14 and possibly also the risk of destruction of the driving mechanism of the car 1. However, an expert would understand that this only is an example serving to illustrate a potential embodiment of the driving mechanism. It is possible to design various embodiments of the driving mechanisms, and it is even not necessary to have both driving mechanisms of the same design. However, having both driving mechanisms of the same design would be advisable to reduce the costs of potential repairs, etc.

Either of the driving mechanisms of the car 1 comprises at least one motor 5 to move the clamping element 13 in relation to the car 1. In the presented embodiment, the motor 5 is connected to the contour roller 6 to ensure reliable movement of the clamping element 13 in the driving mechanism by means of the belt transmission 9. The contour roller 6 can be represented by a toothed cylinder shaped to match the toothed belt, for instance, or a gear wheel with teeth shaped to match the chain, etc. The preferred embodiment is when both driving mechanisms of the car 1 pre-tense the clamping element 13 through a control unit programmed to evaluate information obtained from the motors 5 of the driving mechanisms, e.g. the magnitude of electric current consumption by either of the motors 5, and, on the basis of this information, to control the motors 5 in an appropriate manner, which means that the clamping element 13 will be tightened or re-tightened if, for instance, the clamping element 13 has not contacted the pipe 14 completely, etc., or movement of the car 1 along the pipe 14 being examined will be made as required while simultaneously tightening up the clamping element 13 to the pipe 14 being examined.

Preferably the motors 5 of the driving mechanisms are provided with epicyclic gearing to reduce the speed of the contour roller 6 and to increase the torque at the output shafts. More preferably the axis of the motors 5 is in parallel with the pipe axis (i.e. normal to the direction of the movement of the car 1 along the pipe 14). Preferably, both motors 5 are also provided with respective brakes (not shown) to ensure proper setting of the car 1 of the manipulator on the pipeline and to prevent pulling the clamping element 13 out of the driving members, which could result in the car 1 of the manipulator falling from the pipe 14, and also to ensure that the car 1 remains attached firmly to the clamping element 13 if the drive is turned off.

In the example of the embodiment, either of the driving mechanisms is provided with a belt transmission 9 located between the motor 5 with the gearing (not shown) and the contour roller 6 to ensure torque transmission from the motor 5 to the contour roller 6 driving the clamping element 13. The axis of the shaft of the motor 5 is parallel to the axis of the contour roller 6. In the example of the embodiment, the total transmission ratio consists of the gear ratio of the epicyclic gearing and of the transmission ratio of the belt driving the contour roller 6.

In the embodiment shown, the car 1 of the manipulator is advantageously provided with at least one central supporting wheel 3 with the help of which the car 1 moves easier along the pipe 14 being examined. In the presented embodiment, the car 1 is provided with two central supporting wheels 3 arranged on the sides of the car 1 in an axis normal to the longitudinal axis of the car 1. The longitudinal axis of the car 1 is an imaginary line in the direction of the expected movement of the car 1 on the clamping element 13, or in the direction of the clamping element 13 attached to the clamping mechanisms of the car 1. The car 1 of the manipulator shown in the example of the embodiment makes it possible to change the angle of opening of both tilting parts of the car around a joint mechanism and simultaneously also around the central supporting wheel 3 which moves along the pipeline surface. The design of the manipulator car with the two tilting parts is preferred in order to achieve a low design height of the manipulator when setting it onto pipelines of different diameters.

As already mentioned above, in the presented embodiment, the car is constructed of two tilting parts attached to each other in the axis of the central supporting wheels 3 located on the sides of the car. However, there may be various embodiments of the central supporting wheel proper; the central supporting wheel 3, for instance, can be designed as a roller attached in the tilting axis of both tilting parts, etc. Further, an expert will understand that the attachment of the tilting parts of the car and of the central supporting wheel as described in the example of embodiment is not the only one possible; for instance, one can use four central supporting wheels located in pairs at both edges of the tilting axis of the above-mentioned two tilting parts of the car, or it is also possible to design the central supporting wheels as two rollers attached on the sides of the tilting axis, etc.

In the presented embodiment, the structure of the manipulator makes it possible to change the opening angle of both parts around the axially positioned central supporting wheel 3, while the car 1 is provided with a locking mechanism 12 that makes it possible to secure the set opening of both tilting parts of the car 1 against each other for the given pipe 14 being examined. advantageously, the car 1 is also provided with lateral supporting wheels 4 arranged at the opposite end of both tilting parts of the car 1, so that the car is supported by the lateral supporting wheels 4 when moving along the pipe being examined. This allows achieving a low design height of the manipulator even for various pipeline diameters. More preferably the car 1 of the manipulator is provided with two pairs of lateral supporting wheels 4 arranged at the distant end of both tilting parts as shown in Fig. 1. For the purposes of this description, the term "distant end" means the end of the tilting part located away from the tilting place and adjacent to the pipe being examined when the car moves along it. Both tilting parts of the car 1 of the manipulator can be supported by the lateral supporting wheels 4, and their surface is preferably designed so as to make it possible to turn the car correctly in the direction of setting of the clamping element 13 on the pipe 14 being examined by means of slight side movement of the car of the manipulator when starting the car movement along the pipe being examined, whereby eliminating the risk of skew setting of the car on the pipe and subsequent resulting complications in the traverse of the car around the circumference of the pipe being examined. Preferably, the surface of the lateral supporting wheels 4 is designed of a suitable material to ensure adequate longitudinal control of the car along the pipe being examined. Any side slipping of the car is eliminated by means of the clamping element 13 performing both the driving and guiding function, while the lateral supporting wheels 4 advantageously allow the car to slide sideways to the extent only as "directed" by the clamping element 13. However, it is obvious for an expert that the presence of the lateral supporting wheels 4 is a preferred embodiment only which is not necessary for the function of the manipulator, and/or that the wheels can be replaced by other elements able to ensure reliable movement of the car of the manipulator along the pipe.

The car 1 is provided with an appropriate probe to examine the pipe 14. According to a preferred embodiment of it shown on Fig. 2, the car 1 is provided with a movable arm 10 to attach at least one probe and to handle it when testing the pipe. At its movable end, the movable arm 10 is preferably provided with a clamping device 11 to attach one or more, preferably ultrasonic probes. E.g. the clamping device 11 can be a clamping plate, advantageously designed as a replaceable for holding various probe holders as needed. In the example of embodiment, movement of the movable arm 10 during pipeline examination is executed by means of a linear drive, more preferably comprising a motor with epicyclic gearing and with an output shaft fitted with a pinion and an arm with a toothed rack at the end of which the clamping device 11 is arranged to clamp ultrasonic probes. For instance, when testing the pipe 14 using the pulse echo technique, the probe/probes can move in a "meandering" way. To examine pipelines using the Time-of-Flight Diffraction (TOFD) or the Phased Array technique, on the other hand, the movable arm 10 with the probe/probes can be adjusted at the required distance from the weld of the pipe 14 being examined, while during the examination itself it already does not move, etc. However, it is obvious from the description above that the movable arm 10 is an advantageous embodiment only which can be replaced by a fixed arm of appropriate length for certain examination techniques, or the car 1 can be designed or adapted appropriately to attach probes to examine the pipe 14 so as to make it possible to perform the pipeline examination.

According to its advantageous embodiment, the car 1 of the manipulator is provided with all the equipment needed to perform examinations, including the appropriate sensors to scan the quantities needed to ensure movement and tightening of the clamping element 13 as required. In the embodiment shown, the car 1 is provided with an external control unit with which the car is connected by means of a bundle of feeding and signalling cables. The feeding cables supply power to the motors of the driving mechanisms as appropriate, while the signalling cables transmit control signals and signals from sensors.

The use of the pipeline examination manipulator, preferably for examination of pipeline welds of with limited access, is as follows. At first, the pipeline examination manipulator used to examine pipeline welds, preferably those with limited access, is installed on the pipeline near the weld to be tested, where the car 1 is attached to the pipe 14 by means of the clamping element 13 with free ends, which is the toothed rack in this example of embodiment. One of the free ends of the clamping element 13 is passed through the first driving mechanism of the car 1 to ensure movement of the clamping element 13 in relation to the car 1. The other free end of the clamping element 13 is passed through the other driving mechanism of the car 1 in a similar manner. It is obvious that the embodiment of both driving mechanisms need not be identical in both cases but, with respect to the potential movement of the car 1 along the clamping element 13 in both directions, the symmetrical embodiment of both driving mechanisms is preferred. In the example of the embodiment of the manipulator, clamping of the car 1 of the manipulator to the pipe 14 to be examined by means of the clamping element 13 will be done so that both free ends of the clamping element 13, which is the toothed belt in the example shown, will be applied to the relevant contour rollers 6 over the guide rollers 8 and pressure rollers 7 and then tightened by means of the respective control of the motors 5 driving the contour rollers 6 which, at the moment, turn against each other. It is naturally also possible to control one motor 5 only, but the attachment will be accelerated with the above-mentioned control of both motors 5 turning against each other. After tightening with the pre-set tensile force applied by the motors onto the clamping element, the car is set in the home position on the pipeline. Re-tightening of the clamping element 13 during manipulator's operation, preferably during examination, is done by means of different speed of the motors 5 driving the respective contour roller 6. The control unit is programmed by pre-setting the tensile force to be applied onto the clamping element 13, which is developed during manipulator's operation by controlling appropriately both motors 5 driving the contour rollers 6 of both driving mechanisms, where one of the motors 5 ensures the movement of the car 1 of the manipulator along the clamping element 13 while the other driving mechanism ensures constant tightening of the clamping element 13 to the pipe 14 being examined with the required tensile force. More preferably said tensile force is measured from current consumption of the tightening motor 5 which tightens the clamping element 13 constantly while simultaneously enables the movement of the car 1 of the manipulator along the clamping element 13 ensured by the first motor 5. Preferably the movement of the car with simultaneous re-tightening of the clamping element 13 is enabled thanks to the corresponding control of both motors 5. The specific current and speed values of the motors depend preferably on the types of motors and transmissions used, and they are not provided here.

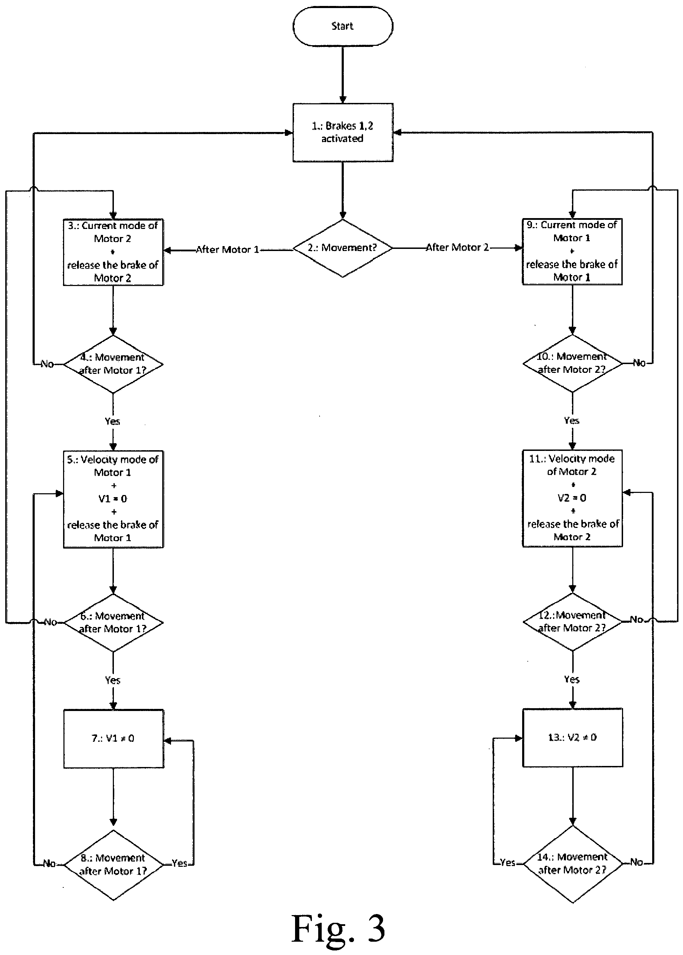

Fig. 3 describes the control unit programming for the individual control modes of the motors 5 of the car 1 in the form of a flow chart:
1. The car 1 of the manipulator is at a standstill, which means that the brakes of both motors 5 are activated.
2. When the operator issues a command to move the car 1, the required direction of movement of the car 1 is analysed first, i.e. whether the car is to move in the direction after motor 1 or motor 2.
3. If the resulting movement is in the direction after motor 1, i.e. motor 1 will be the driving one setting the movement velocity and length, motor 2 is changed over to the current mode in which the current going through this motor to tighten up the clamping element 13 to the pre-set value is evaluated, and the brake of motor 2 will be released. This procedure will generate tension in the clamping element.
4. Continuation of car movement after motor 1 is being evaluated.
5. Motor 1 is turned over to the speed mode, while motor 1 velocity is still zero and the brake of motor 1 is released.
6. Continuation of movement after motor 1 is being evaluated.
7. The required velocity of circumferential traverse is set as the velocity of motor 1.
8. Continuation of movement after motor 1 is being evaluated.
Steps 9 - 14 are analogous to steps 3 - 8 modified for movement after motor 2.

Subsequently, both motors 5 of the driving mechanisms are controlled so as to ensure the required movement of the car 1 of the manipulator along the pipe 14 being examined while simultaneously constantly tightening up the clamping element 13 and performing the procedure of examination of the weld of the pipe 14 being examined with probes taking the values of the quantities measured to evaluate weld quality. The weld around the whole circumference of the pipe 14 being examined will be tested gradually.

An expert will certainly understand that there is a number of structural modifications available for the example of the embodiment described above. For instance, it is possible to design the car as a single unit, i.e. without both tilting parts, where both guideways would be arranged at a distance from each other as appropriate for the car to be able to traverse along the clamping element around the pipe being examined without having to tilt the tilting parts with the respective driving mechanisms. Or, on the contrary, it is possible to design the car with more than two tilting parts, where the driving mechanism could be mounted in even more than two of them. In such a case, it would be advisable to program the control unit appropriately to control the drives so that the car would move as required along the pipe being examined while simultaneously tightening up the clamping element to prevent the car from getting released from the pipe.

The practical application of the proposed solution is intended for examination of circumferential welds of pipelines of outer diameters from 200 mm to 1250 mm in all industries and in all types of power plants, preferably of pipelines from non-magnetic materials as installed in the operated nuclear power plants. The design also makes it possible to use the device in places where access to the weld is restricted by obstacles in both radial and axial direction. The proposed invention can also be used to examine the pipe base materials.

### List of reference numerals

- 1: Car
- 2: Brace
- 3: Central supporting wheel
- 4: Lateral supporting wheel
- 5: Motor
- 6: Contour roller
- 7: Pressure roller
- 8: Guide roller
- 9: Belt transmission
- 10: Movable arm
- 11: Probe clamping device
- 12.: Locking mechanism
- 13: Clamping element
- 14: Pipe

## Claims

1. Pipeline examination manipulator, preferably for an examination of pipeline circumferential welds with a limited access, comprising at least a car (1) for holding at least one probe, a control unit and a clamping element (13) to clamp the assembly around a pipe (14) to be examined, where the car (1) is designed for circumferential movement around the pipe (14) being examined, **characterized in that** the clamping element (13) is designed to go round the pipe (14) being examined and has two opposite free ends, and that the car (1) is provided with two independent driving mechanisms positioned at a distance from each other, which are designed to attach the car (1) to the clamping element (13) and to move on it around the pipe (14) being examined, while the control unit is programmed to control one of the driving mechanisms to ensure the required movement of the car (1) along the pipe (14) being examined and to control the other driving mechanism to ensure tightening of the clamping element (13) during the said movement of the car (1) by tightening the clamping element (13) to the pipe (14).

2. Pipeline examination manipulator according to Claim 1, **characterized in that** the car (1) comprises at least two tilting parts connected with a joint to accommodate the shape of the car (1) to various outer diameters of the pipe (14) being examined.

3. Pipeline examination manipulator according to Claim 2, **characterized in that** the joint connection is provided with a locking mechanism (12) to fix it in a selected position.

4. Pipeline examination manipulator according to Claim 2 or 3, **characterized in that** it is provided with at least one central supporting wheel (3) arranged in the place of the joint connection.

5. Pipeline examination manipulator according to any of Claims 1 to 4, **characterized in that** either of both driving mechanisms comprises a contour roller (6) driven by a motor (5), where the contour roller (6) is designed to feed the clamping element (13) through the driving mechanism.

6. Pipeline examination manipulator according to any of Claims 1 to 5, **characterized in that** the clamping element (13) is a toothed belt or a chain.

7. Pipeline examination manipulator according to any of Claims 1 to 6, **characterized in that** the car (1) is provided with a movable arm (10) with the direction of movement parallel with the axis of the pipe (14) being examined.

8. Pipeline examination manipulator according to any of Claims 1 to 7, **characterized in that** the car is connected to a control unit programmed at least for movement in one of the following modes: clamping mode for attaching or removing the car to or from the pipe with a limited moment of force to avoid operator's injury and automatic control mode with active additional tightening of the clamping element.

9. Method of attachment of a pipeline examination manipulator according to any of Claims 1 to 8 to a pipe (14) being examined, **characterized in that** a clamping element is arranged around the pipe, with its free ends being attached subsequently in the driving mechanisms of the car, with subsequent tightening of the clamping element (13) around the pipe (14) by controlling the driving mechanisms.
